(19) Europäisches Patentamt
European Patent Office
Office européen des brevets

(11) **EP 3 454 195 A1**

(12) **EUROPEAN PATENT APPLICATION**
published in accordance with Art. 153(4) EPC

(43) Date of publication:
**13.03.2019 Bulletin 2019/11**

(21) Application number: **17792387.7**

(22) Date of filing: **21.03.2017**

(51) Int Cl.:
***G06F 3/0484*** (2013.01)

(86) International application number:
**PCT/CN2017/077547**

(87) International publication number:
**WO 2017/190560 (09.11.2017 Gazette 2017/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.05.2016 CN 201610297106**

(71) Applicant: **Ping An Technology (Shenzhen) Co., Ltd.**
**Shenzhen, Guangdong 518000 (CN)**

(72) Inventor: **WANG, Xiaozhang**
**Shenzhen**
**Guangdong 518000 (CN)**

(74) Representative: **Haseltine Lake LLP**
**Lincoln House, 5th Floor**
**300 High Holborn**
**London WC1V 7JH (GB)**

(54) **DISPLAY CONTROL METHOD AND DEVICE FOR SIDE SLIDING INTERFACE, TERMINAL AND STORAGE MEDIUM**

(57) A display control method for a side sliding interface, comprising: acquiring a first sliding speed of a slide touch-control point in real time, wherein the slide touch-control point acts on an arbitrary position on the side sliding interface, and the first sliding speed contains a first sliding rate and a first sliding direction; calculating a second sliding rate corresponding to a menu page and a third sliding rate corresponding to a main page according to the first sliding rate, and determining a side sliding direction corresponding to the menu page and the main page according to the first sliding direction; and controlling the menu page and the main page to respectively slide at the second sliding rate and at the third sliding rate correspondingly in the side sliding direction.

```
                                         ┌─ S202
┌──────────────────────────────────────────┐
│ acquiring a first sliding velocity of a    │
│ sliding touch point in real time, wherein  │
│ the sliding touch point acts on arbitrary  │
│ position of a side sliding interface, the  │
│ first sliding velocity comprises a first   │
│ sliding speed and a first sliding direction│
└──────────────────────────────────────────┘
                    │
                    ▼                    ┌─ S204
┌──────────────────────────────────────────┐
│ calculating a second sliding speed of a    │
│ menu page and a third sliding speed of a   │
│ main page according to the first sliding   │
│ speed, and determining a side sliding      │
│ direction of the menu page and the main    │
│ page according to the first sliding        │
│ direction                                   │
└──────────────────────────────────────────┘
                    │
                    ▼                    ┌─ S206
┌──────────────────────────────────────────┐
│ controlling the menu page and the main     │
│ page to slide at the second sliding speed  │
│ and the third sliding speed respectively   │
│ along the side sliding direction           │
└──────────────────────────────────────────┘
```

FIG. 2

**Description**

**CROSS REFERENCE TO RELATED APPLICATIONS**

The present application claims priority of China Patent Application No. 2016102971061, titled "display control method and device of side sliding interface", filed May 6, 2016, the entire content of which is incorporated herein in its entirety.

**TECHNICAL FIELD**

The present disclosure relates to computer technology, and more particularly relates to display control method and device of a side sliding interface, a terminal and a storage medium.

**BACKGROUND**

With the development of science and technology, more and more contents can be displayed and handled by an interface of a mobile terminal, and requirements of screen utilization are getting higher and higher. In this era background, a side sliding menu arises as the times require. A menu navigation can be set on a menu page by a user and the menu page can be hidden or shown such as by side sliding a main page or clicking on an avatar. It should be understood that the menu navigation refers to a navigation containing menu items such as personal information, settings, and the like.

In a conventional method, when user performs a side sliding operation, it usually controls whether displaying a subordinate menu page of the main page by controlling a movement of the main page. In addition, when controlling the main page to slide, it usually determines how to move the main page according to an ending position of a final side sliding operation. Thus, when side sliding in the conventional method, the side sliding interface has a low controllability.

**SUMMARY**

According to various embodiments of the present disclosure, a display control method of a side sliding interface, a terminal, and a storage medium are provided.

A display control method of a side sliding interface includes:

acquiring a first sliding velocity of a sliding touch point in real time, wherein the sliding touch point acts at arbitrary position on a side sliding interface, the first sliding velocity includes a first sliding speed and a first sliding direction;

calculating a second sliding speed of a menu page and a third sliding speed of a main page according to the first sliding speed, and determining a side sliding direction of the menu page and the main page according to the first sliding direction; and

controlling the menu page and the main page to slide at the second sliding speed and the third sliding speed respectively along the side sliding direction.

A display control device of a side sliding interface includes:

a speed monitoring module configured to acquire a first sliding velocity of a sliding touch point in real time, wherein the sliding touch point acts at arbitrary position on a side sliding interface, the first sliding velocity includes a first sliding speed and a first sliding direction;

a calculating module configured to calculate a second sliding speed of a menu page and a third sliding speed of a main page according to the first sliding speed, and determine a side sliding direction of the menu page and the main page according to the first sliding direction; and

a sliding control module configured to control the menu page and the main page to slide at the second sliding speed and the third sliding speed respectively along the side sliding direction.

A terminal includes a memory and a processor, wherein the memory is stored with instructions, which, when executed by the processor causes the processor to perform following steps of:

acquiring a first sliding velocity of a sliding touch point in real time, wherein the sliding touch point acts at arbitrary position on a side sliding interface, the first sliding velocity includes a first sliding speed and a first sliding direction;

calculating a second sliding speed of a menu page and a third sliding speed of a main page according to the first sliding speed, and determining a side sliding direction of the menu page and the main page according to the first sliding direction; and

controlling the menu page and the main page to slide at the second sliding speed and the third sliding speed respectively along the side sliding direction.

One or more non-transitory readable storage medium stores computer-executable instructions that, when executed by one or more processors, cause the one or more processors to perform following steps of:

acquiring a first sliding velocity of a sliding touch point in real time, wherein the sliding touch point acts at arbitrary position on a side sliding interface, the first sliding velocity includes a first sliding speed and a first sliding direction; calculating a second sliding speed of a menu page and a third sliding speed of a main page according to the first sliding speed, and determining a side sliding direction of the menu page and the main page according to the first sliding direction; and controlling the menu page and the main page to slide at the second sliding speed and the third sliding speed respectively along the side sliding direction.

Details of one or more embodiments of the present application are set forth in accompanying drawings and description below. Other features, objects, and advantages of the present application will become apparent upon review of the following specification, drawings, and claims.

## BRIEF DESCRIPTION OF THE DRAWINGS

In order to describe the technical solutions in the embodiments of the present application or in the prior art more clearly, the following briefly introduces the accompanying drawings required for describing the embodiments or the prior art. Apparently, the accompanying drawings in the following description merely show some embodiments of the present application. For those of ordinary skill in the art, other drawings can be acquired based on these drawings without any creative work.

FIG. 1 is a block diagram of a terminal in accordance with an embodiment;
FIG. 2 is a flowchart of a display control method of a side sliding interface in accordance with an embodiment;
FIG. 3 is a schematic diagram of a side sliding interface in accordance with an embodiment;
FIG. 4 is a schematic diagram of an interface for describing a display control method of a side sliding interface in accordance with an embodiment;
FIG. 5 is a schematic diagram of an interface for describing a display control method of a side sliding interface in accordance with another embodiment;
FIG. 6 is a schematic diagram of an interface for describing a display control method of a side sliding interface in accordance with a still another embodiment;
FIG. 7 is a flowchart of a method for adjusting size of a second button in accordance with an embodiment;
FIG. 8 is a schematic diagram of a side sliding interface for describing an angle corresponding to the second button in accordance with an embodiment;
FIG. 9 is a flowchart of a method for completing a maximum sliding distance in accordance with an embodiment;
FIG. 10 is a schematic diagram of an interface for describing a display control method of a side sliding interface in accordance with one more another embodiment; and
FIG. 11 is a block diagram of a display control device of a side sliding interface in accordance with an embodiment.

## DETAILED DESCRIPTION OF THE EMBODIMENTS

In order to make the objects, technical solutions and advantages of the present disclosure more comprehensible, the present disclosure will be further described in detail with reference to the accompanying drawings and embodiments. It should be understood that the specific embodiments described herein are only used to explain the present disclosure, and are not intended to limit the present disclosure.

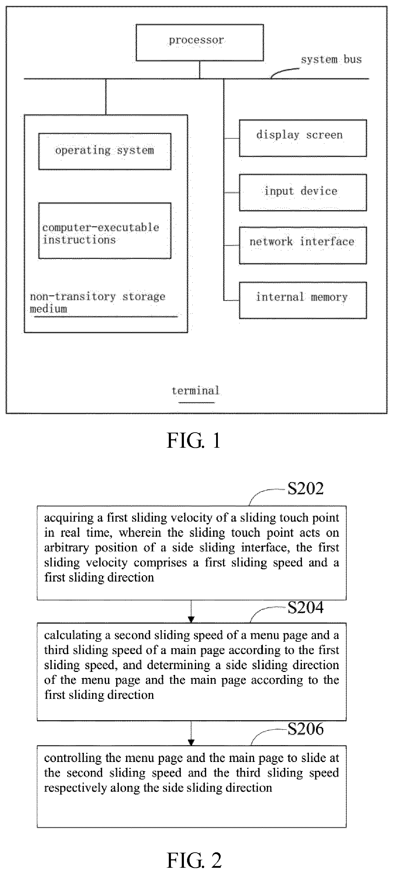

In one embodiment, a terminal is provided, on which applications can be installed. The terminal can be a cell phone, a tablet, a laptop, a desktop computer, and the like. Referring to FIG. 1, the terminal includes a processor, an internal storage, a non-transitory storage medium, a network interface, a display screen, and an input device connected through a system bus. The processor is used for providing computing and control capabilities to support an operation of the entire terminal. The non-transitory storage medium of the terminal stores an operating system and computer-executable instructions. The computer-executable instructions can be executed by the processor to implement a display control method of a side sliding interface provided in various embodiments below. The internal storage in the terminal provides an environment for operations of the operating system and computer-executable instructions in the non-transitory storage medium. The network interface is used for connecting to a network for communication. The display screen of the terminal can be a liquid crystal display, an electronic ink display, and the like. In this embodiment, the display screen is served as an output device of the terminal for displaying various interfaces such as a menu page or a main page. The input device can be a touch layer covered on the display screen, buttons, a trackball or a touchpad provided on a shell of an electronic device, an external keyboard, touchpad, mouse, and the like for a user to input various instructions, for example, in this embodiment, for the user to input instructions of sliding operation.

It is understood for those skilled in the art that the structures illustrated in FIG. 1 is merely a block diagram of a part of structures related to a solution of the present application and does not constitute a limitation on the terminal to which the solution of the present application is applied. A specific terminal can include more or less components than that in the illustrated figures, combine some components, or have a different component arrangement.

Referring to FIG. 2, in one embodiment, a display control method of a side sliding interface is provided. The method applied to the terminal illustrated in FIG. 1 is taken as an example for description, and includes the following steps.

In step S202, a first sliding velocity of a slide touch control point is acquired in real time. The slide touch control point can act on arbitrary position of a side sliding interface. The first sliding velocity includes a first sliding speed and a first sliding direction.

In this embodiment, a user performs a sliding operation on the side sliding interface displayed on the terminal. Specifically, the user generates a slide touch control point for a sliding operation by touching arbitrary position of the side sliding interface of the terminal. The side sliding interface is used for indicating an interface displayed on the display screen of the terminal when performing the sliding operation. The side sliding interface can be a main page which is starting to receive a side sliding operation but has not displayed any portion of a menu page yet, or a combined interface of the menu page and the main page displayed after side sliding the menu page out.

In addition, the menu page refers to a page which contains a menu bar and can be controlled to be hidden or displayed via side sliding operation. The main page refers to a page that is used for displaying main business content.

Further explanation of the side sliding interface is provided. Assuming that a vertex angle of the display screen of the terminal is a coordinate origin (0, 0). Coordinates of arbitrary other points on the display screen are (x, y), and values of x and y can be default positive numbers when combining with an actual situation. And a maximum coordinate on the screen is $(x_{max}, y_{max})$. When conducting a side sliding operation, the side sliding interface is an interface displayed from the coordinate origin (0, 0) to the coordinate $(x_{max}, y_{max})$ throughout the entire display screen.

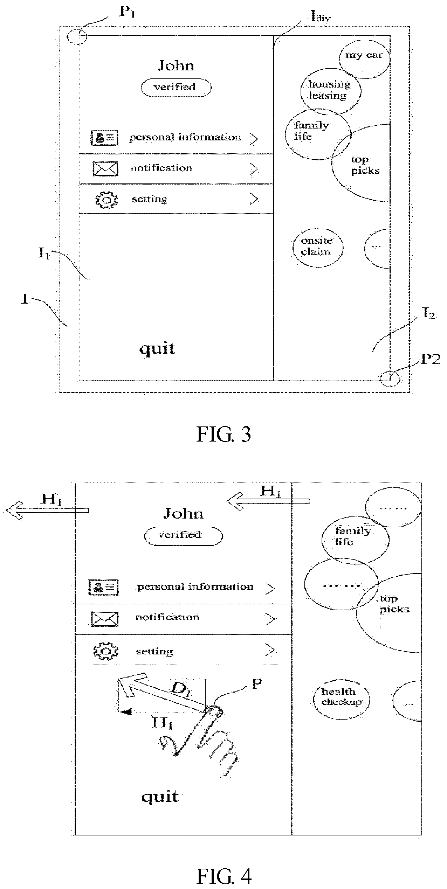

Referring to FIG. 3, it shows a side sliding interface after side sliding the menu page out. Fixed point $P_1$ (0, 0) is a coordinate origin, a coordinate of a vertex $P_2$ is $(x_{max}, y_{max})$, and a screen display area surrounded by a dotted line frame is the side sliding interface $I$. A left portion of the dividing line $I_{div}$ of the side sliding interface is the menu page $I_1$, and a right portion thereof is the main page $I_2$. The slide touch control point can act on arbitrary position of the side sliding interface $I$.

The terminal acquires the first sliding velocity of the generated slide touch control point in real time. It should be understood that the first sliding velocity here includes the first sliding speed and the first sliding direction, the first sliding speed refers to a sliding speed of the slide touch control point, and the first sliding direction refers to a sliding direction of the slide touch control point. Specifically, the terminal calls an API (application programming interface) to acquire the first sliding speed and the first sliding direction of the slide touch control point in real time through a gesture processor.

In step S204, a second sliding speed of the menu page and a third sliding speed of the main page are calculated according to the first sliding speed, and a side sliding direction of the menu page and the main page is determined according to a first sliding direction.

In step S206, the menu page and the main page are controlled to slide at the second sliding speed and the third sliding speed respectively along the side sliding direction.

Specifically, the terminal calculates the second sliding speed of the menu page and the third sliding speed of the main page according to the first sliding speed.

The second sliding speed and the third sliding speed respectively have a ratio relationship with the first sliding speed. Specifically, the second sliding speed can be acquired according to a product of the first sliding speed and a first preset constant, and the third sliding speed can be acquired according to a product of the first sliding speed and a second preset constant. It should be noted that both of the first preset constant and the second preset constant are positive numbers.

The first preset constant can be less than the second preset constant. In one embodiment, the first preset constant is a positive number less than 1, and the second preset constant is equal to 1. By presetting the first preset constant to be less than the second preset constant, the second sliding speed of the menu page is set to be less than the third sliding speed of the main page. During a side sliding, a display control between the main page and the menu page is gradient and cohesive to make display of the entire side sliding interface much more fluently.

It should be understood that the first preset constant can be equal to the second preset constant.

In addition, the terminal further determines the side sliding direction of the menu page and the main page according to the first sliding direction. It can be understood that the side sliding direction refers to a direction sliding along a horizontal leftward or rightward of a current display interface with reference to a perspective of the user, and a direction presented by the current display interface is consistent with the perspective of the user.

It should be noted that in all embodiments of the present application, description of directions such as a horizontal direction, a horizontal sub-direction, left, right, up, down, and the like are established with reference to the perspective of the user, and the direction presented by the current display interface is consistent with the perspective of the user.

Specifically, a horizontal sub-direction of the first sliding direction can be served as the side sliding direction of the menu page and the main page. For example, when the horizontal sub-direction of the first sliding direction is horizontal leftward, then the side sliding direction of the menu page and the main page is determined to be horizontal leftward, and when the horizontal sub-direction of the first sliding direction is horizontal rightward, then the side sliding direction of the menu page and the main page is determined to be horizontal rightward. It can be understood that when there is no horizontal sub-direction of the first sliding direction, then no side sliding direction is generated, and the main page and the menu page do not slide correspondingly.

In addition, the menu page and the main page are controlled to slide at the second sliding speed and the third sliding speed respectively along the side sliding direction. That is, the menu page is controlled to slide at a second sliding speed along the side sliding direction, and the main page is controlled to slide at the third sliding speed along the side sliding direction.

Referring to FIG. 4 for further description, it shows a side sliding interface for performing a side sliding operation in one embodiment. Assuming that the user acts on the side sliding interface through a slide touch control point $P$ and slides along a direction $D1$ at a first sliding speed $V1$, then a horizontal sub-direction of the direction $D1$ is determined as direction $H1$, a second sliding speed $V2$ of the menu page and a third sliding speed $V3$ of the main page are calculated according to the first sliding speed $V1$, and the menu page is controlled to slide at the second sliding speed $V2$ along the horizontal sub-direction $H1$ and the main page is controlled to slide at the third sliding speed $V3$ along the horizontal sub-direction $H1$.

In this embodiment, the slide touch control point can act on arbitrary position of the side sliding interface to enlarge a controllable area of the side sliding interface and enhance a controllability of the side sliding interface. In addition, the first sliding velocity of the slide touch control point is acquired in real time, the second sliding speed of the menu page and the third sliding speed of the main page are calculated according to the first sliding speed of the first sliding velocity, the side sliding direction of the menu page and the main page is determined according to the first sliding direction, and the menu page and the main page are controlled to slide at the second sliding speed and the third sliding speed respectively along the side sliding direction. That is, a real-time sliding of the slide touch control point and a sliding of the menu page and main page of the side sliding interface are combined via controlling the sliding speed and sliding direction of the menu page and the main page according to the real-time sliding velocity of the slide touch control point, therefore further enhancing controllability of the side sliding interface and fluency of displaying contents on the side sliding interface.

In an embodiment, prior to step S204, the method further includes acquiring a horizontal sub-direction corresponding to the first sliding direction, and determining whether an angle of the first sliding direction with respect to the horizontal sub-direction is within a preset range. If the angle of the first sliding direction with respect to the horizontal sub-direction is within the preset range, the step S204 is performed, otherwise, the side sliding operation caused by the slide touch control point is not executed. By setting the preset range, unwanted side sliding operation caused by misjudgment can be effectively reduced, thereby saving processing resources.

In one embodiment, the main page includes animation, and after the step of acquiring the first sliding velocity of the slide touch control point in real time, steps of calculating a motion parameter of the animation according to the first sliding velocity, and performing the animation according to the motion parameter are further included.

Specifically, the main page includes the animation, and the number of the included animation can be one or more. After acquiring the first sliding velocity of the slide touch control point in real time, the terminal calculates the motion parameter of the animation included in the main page according to the first sliding velocity, and performs the animation according to the calculated motion parameter to show an animation effect. The motion parameter include a motion velocity. In addition, the motion velocity includes a motion speed and a motion direction.

In this embodiment, the motion parameter of the animation in the main page is calculated according to the first sliding velocity of the slide touch control point, so that during the side sliding, execution and display of the animation of the main page are controlled by the first sliding velocity of the slide touch control point, thus enhancing controllability and fluency of the display of the animation in the side sliding interface.

In one embodiment, the animation in the main page includes a first animation, and the first animation includes a virtual turntable. The step of calculating the motion parameter of the animation according to the first sliding velocity includes: acquiring a first calculation parameter; and calculating a rotation speed and a rotation direction of the virtual turntable according to the first calculation parameter and the first sliding velocity.

In this embodiment, the animation in the main page includes the first animation, and the first animation includes the virtual turntable. The virtual turntable can be a three-dimensional virtual turntable or a two-dimensional virtual turntable.

In addition, the terminal acquires the first calculation parameter set in advance, and calculates the rotation speed and the rotation direction of the virtual turntable according to the first calculation parameter and the first sliding velocity. That is, the rotation speed of the virtual turntable is calculated according to the first sliding speed of the first sliding velocity and the first calculation parameter, and the rotation direction of the virtual turntable is determined according to the first sliding direction of the first sliding velocity.

Specifically, the rotation direction of the virtual turntable corresponding to the first sliding direction of the slide touch control point is determined according to a preset corresponding relationship between the horizontal sub-direction of the first sliding direction and the rotating direction of the virtual turntable. For example, when the horizontal sub-direction of the first sliding direction is horizontal leftward, the rotation direction of the virtual turntable is clockwise, and when the horizontal sub-direction of the first sliding direction is horizontal rightward, the rotation direction of the virtual turntable is counterclockwise. It can be understood that in another embodiment when the horizontal sub-direction of the first sliding direction is horizontal leftward, the rotation direction of the virtual turntable can be counterclockwise. A specific corresponding relationship between the horizontal sub-direction of the first sliding direction and the rotation direction of the virtual turntable is not limited in the embodiments of the present disclosure, as long as that there is a corresponding relationship between the horizontal sub-direction of the first sliding direction and the rotation direction of the virtual turntable.

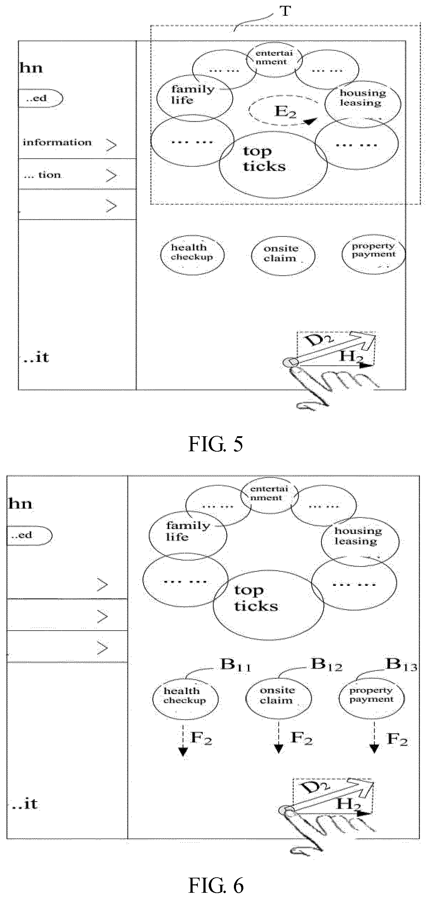

Referring to FIG. 5, it shows a side sliding interface when performing a side sliding operation in one embodiment. The user acts on the side sliding interface through the slide touch control point, slides at the first sliding speed $V_1$ along direction $D_2$, the horizontal sub-direction of the direction $D_2$ is determined as $H_2$, and then the rotation direction of the virtual turntable $T$ corresponding to $H_2$ is determined as counterclockwise $E_2$ according to the corresponding relationship between the horizontal sub-direction of the first sliding direction and the rotation direction of the virtual turntable $T$.

In this embodiment, the rotation speed and the rotation direction of the virtual turntable in the first animation is calculated according to the first sliding velocity of the slide touch control point and the first calculation parameter, so that during the side sliding, the rotation of the virtual turntable in the first animation of the main page is controlled by the first sliding velocity of the slide touch control point, therefore enhancing controllability and fluency of the rotation of the virtual turntable in the first animation of the side sliding interface.

In one embodiment, prior to the step of acquiring the first calculation parameter, a step of calculating the first calculation parameter is further included, which includes: acquiring a perimeter of the virtual turntable and a maximum width of preset menu page; and calculating the first calculation parameter according to a ratio of the perimeter of the virtual turn table to the maximum width of preset menu page.

Specifically, the terminal can acquire a pre-stored perimeter of the virtual turntable immediately, or acquire a radius of the virtual turntable and calculate the perimeter of the virtual turntable according to the radius. In addition, the terminal acquires the maximum width of preset menu page (hereinafter referred to as maximum width), and calculates the first calculation parameter according to the ratio of the perimeter of the virtual turntable to the maximum width.

The maximum width of preset menu page refers to a maximum width of the menu page that can be displayed. For example, when a current displayed width of the menu page is less than the maximum width, a leftward or rightward side sliding operation can be performed. When the current displayed width of the menu page is equal to the maximum width, the terminal performs the side sliding operation only when the side sliding operation is a leftward side sliding operation. If the side sliding operation is a continuously rightward side sliding operation, then the terminal does not perform the side sliding operation.

In addition, the ratio of the perimeter of the virtual turntable to the maximum width can be preset as 1: 1 to acquire the first calculation parameter, then the first calculation parameter $K_1 = 2M\_PI * R$, and $M\_PI$ indicates pi, $R$ indicates the radius of the virtual turntable, and $W$ indicates the maximum width of the menu page. In this embodiment, when the menu page and the main page are slid to the maximum width of one menu page, the virtual turntable completes the rotation of exactly one cycle, thereby enhancing relevance and integrity of the side sliding operation and the first animation, and further enhancing controllability and fluency of the rotation of the virtual turntable in the first animation of the side sliding interface.

It should be understood that the ratio of the perimeter of the virtual turntable to the maximum width can be preset as other ratio to acquire the first calculation parameter, which is not limited in the embodiments of the present disclosure, as long as that the first calculation parameter is calculated according to the ratio of the perimeter of the virtual turntable to the preset maximum width.

In one embodiment, the animation in the main page includes a second animation, and the second animation includes a first button. The step of calculating the motion parameter of the animation according to the first sliding velocity (simply referred to as motion parameter calculation step) further includes: acquiring a second calculation parameter, and calculating a moving speed and a moving direction of the first button according to the second calculation parameter and the first sliding velocity.

In this embodiment, the animation in the main page includes the second animation, and the second animation includes at least one first buttons. The at least one first buttons can be icon buttons, text buttons, or icon-text combined buttons. It can be understood that when there are multiple first buttons, types of the first buttons can be same or different, and specific types of the buttons in the embodiments of the present disclosure are not limited. In addition, the at least one first buttons can be arranged according to a preset rule and displayed on the main page.

The terminal acquires the second calculation parameter set in advance, and calculates the moving speed and the moving direction of the at least one first buttons according to the second calculation parameter and the first sliding velocity. That is, the moving speed of at least one first buttons is calculated according to the first sliding speed of the first sliding velocity and the second calculation parameter, and the moving direction of at least one first button is determined according to the first sliding direction of the first sliding velocity.

Specifically, the moving direction of the first button corresponding to the first sliding direction of the slide touch control point is determined according to a preset corresponding relationship between the horizontal sub-direction of the first sliding direction and the moving direction of the first button. For example, when the horizontal sub-direction of the first sliding direction is horizontal leftward, the first button moves downward based on the current display interface, and when the horizontal sub-direction of the first sliding direction is horizontal rightward, the first button moves upward based on the current display interface. It can be understood that in other embodiment the first button can move upward based on the current display interface when the horizontal sub-direction of the first sliding direction is horizontal leftward. In the embodiments of the present disclosure, specific corresponding relationship between the horizontal sub-direction of the first sliding direction and the moving direction of the first button is not limited, as long as there is a corresponding relationship between the horizontal sub-direction of the first sliding direction and the moving direction of the first button.

Referring to FIG. 6, it shows a side sliding interface for performing a side sliding operation in one embodiment. The user acts on the side sliding interface through the slide touch control point and slides at the first sliding speed $V_1$ along the direction $D_2$. The horizontal sub-direction of the direction $D_2$ is determined as direction $H_2$. The moving direction of the first buttons $B_{11}$, $B_{12}$, and $B_{13}$ corresponding to the direction H2 is determined downward $F_2$ according to the corresponding relationship between the horizontal sub-direction of the first sliding direction and the moving direction of the first button.

In this embodiment, the moving speed and the moving direction of the first button in the second animation is calculated according to the first sliding speed of the slide touch control point and the second calculation parameter, so that during the side sliding operation a movement of the first button in the second animation of the main page is controlled by the first sliding velocity of the slide touch control point, thereby enhancing controllability and fluency of the movement of the first button in the second animation of the side sliding interface.

In one embodiment, prior to the step of acquiring the second calculation parameter, a step of calculating the second calculation parameter is further included, which includes: acquiring at least one preset moving range corresponding to the first button; determining a movement difference according to the preset moving range; acquiring the maximum width of preset menu page; and calculating the second calculation parameter according to a ratio of the movement difference to the maximum width of preset menu page.

In this embodiment, the terminal acquires the at least one preset moving range of the first button along the moving direction. For example, when the first button moves upward along a $Y$ direction, that is, a vertical direction, the preset moving range of the first button is from $y_1$ to $y_2$, and $y_2$ indicates a maximum movement value, and $y_1$ indicates a minimum movement value. In addition, the movement difference is determined according to the preset moving range, and the movement difference is a difference between the maximum movement value and the minimum movement value in the moving range. In combination with the above example, the movement difference is equal to $y_2$ minus $y_1$.

In addition, the maximum width of preset menu page is acquired, and the second calculation parameter is calculated according to the ratio of the movement difference to the preset maximum width (hereinafter simply referred to as maximum width) of the menu page.

In addition, the ratio of the movement difference to the maximum width is preset as 1: 1 to acquire the second calculation parameter, then the second calculation parameter $K_2 = (y_2 - y_1) / W$, and $y_2$ indicates the maximum movement value, $y_1$ indicates the minimum movement value, $y_2 - y_1$ indicates the movement difference, and $W$ indicates the maximum width. In this embodiment, when the menu page and the main page are slid to the maximum width of one menu page, the first button completes the movement of exactly one cycle, thereby enhancing relevance and integrity of the side sliding operation and the second animation, and further enhancing controllability and fluency of the movement of the first button in the second animation of the side sliding interface.

It should be understood that the ratio of the movement difference to the maximum width can be preset as other ratio to acquire the second calculation parameter, which is not limited in the embodiments of the present disclosure, as long as that the second calculation parameter is calculated according to the ratio of the movement difference to the maximum width.

It can be understood that the main page can include both of the first animation and the second animation at the same time, only include the first animation, or only include the second animation.

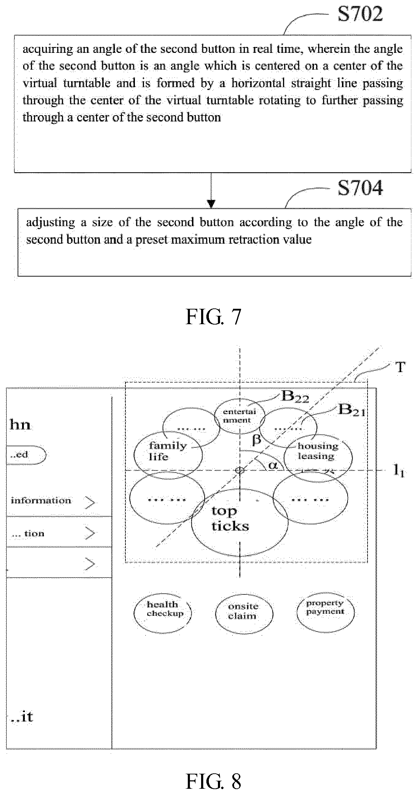

Referring to FIG. 7, in one embodiment, the virtual turntable includes a second button, and the method further includes a step of adjusting a size of the second button, which includes the following steps.

In step S702, a angle of the second button is acquired in real time, the angle of the second button is an angle which is centered on a center of the virtual turntable and is formed by a horizontal straight line passing through the center of the virtual turntable rotating to further passing through a center of the second button.

In this embodiment, the virtual turntable includes at least one second buttons. Position of the second button changes accordingly with the rotation of the virtual turntable. When there are multiple second buttons, relative positions of centers of adjacent second buttons keep unchanged. In addition, the at least one second buttons can be icon buttons, text buttons, or icon-text combined buttons. It can be understood that when there are multiple second buttons, types of the second buttons can be same or different, and specific types of the second buttons in the embodiments of the present disclosure are not limited. In addition, the at least one second buttons can be distributed on a ring of the virtual turntable according to a preset rule and displayed on the main page. A distribution of the at least one second buttons can be an average distribution or a non-average distribution, which is not limited in the embodiments of the present disclosure.

In addition, the terminal acquires the angle of the at least one second button in real time. The angle of the second button is centered on the center of the virtual turntable and is formed by a horizontal straight line passing through the center of the virtual turntable rotating to further passing through a center of the second button with reference to the current displayed interface which is consistent with perspective of the user. For example, referring to FIG. 8, it shows a currently displayed side sliding interface consistent with the perspective of the user. The center of the virtual turntable is served as a center of a circle, the horizontal line $l_1$ passing through the center of the virtual turntable is served as a starting edge of a rotation. When the line $l_1$ rotates to a position further passing through the center of second button $B_{21}$, an angle $\alpha$ is formed, and then the angle of the second button $B_{21}$ is $\alpha$. When the line $l_1$ rotates to a position further passing through the center of second button $B_{22}$, an angle $\beta$ is formed, and then the angle of the second button $B_{22}$ is $\beta$.

It can be understood that during the rotation of the virtual turntable, the angle of the second button changes accordingly with the rotation.

In step S704, the size of the second button is adjusted according to the angle of the second button and a preset maximum retraction value.

In this embodiment, the terminal presets the maximum retraction value. The maximum retraction value is equal to a difference between a maximum value and a minimum value of size characterization parameter of the second button. The size characterization parameter of the second button refers to a parameter which is used for characterizing the size of the second button. In addition, the size characterization parameter of the second button can be a side length of the second button, or a measurement parameter such as a radius, a diameter, or a diagonal of the second button, or the like that can characterize and adjust the size of the second button.

It should be noted that, a boundary shape of the second button can be a regular graphic, such as a circle, an ellipse, a regular polygon, or the like. In this case, the size characterization parameter of the second button can be a radius, a diameter, a side length or the like. In addition, the boundary shape of the second button can be various irregular shapes. In this case, the size characterization parameter of the second button can be any number of side lengths, diagonals, or the like. Specific boundary shape of the second button in the embodiments of the present disclosure is not limited. Similarly, the type of the size characterization parameter of the second button is not limited, as long as the size characterization parameter can characterize and adjust the size of the second button.

In addition, the size of the second button is adjusted according to the angle of the second button and the maximum retraction value. Specifically, in one embodiment, the size of the at least one second buttons can be adjusted according to the angle of the second button, the preset maximum retraction value, and the size characterization parameter of the second button. Furthermore, the size characterization parameter $M'$ of the adjusted second button can be calculated according to following formula:

$$M' = cos(n\ /\ 2 + M\_PI\ /\ 4)\ ^*\ c + M_{min},$$

wherein $n$ indicates the angle of the second button, $M\_PI$ indicates pi, $M_{min}$ indicates the minimum value of the size characterization parameter of the second button, $c$ indicates the maximum retraction value, and

$$c = M_{max}\text{-}M_{min},$$

wherein $M_{max}$ indicates the maximum value of the size characterization parameter of the second button. In addition, the size of the second button is adjusted according to the characterization parameter $M'$ of the adjusted second button.

In addition, in one embodiment, the boundary shape of the second button can be a circle, and the size characterization parameter of the second button is a radius or a diameter. Assuming that the size characterization parameter of the second button is a radius, the size of the second button can be adjusted according to the angle of the second button, the preset maximum retraction value, and the minimum radius of the second button. The adjusted radius $r'$ of the second button can be calculated by following formulas:

$$r' = cos\ (n\ /\ 2 + M\_PI\ /\ 4)\ *\ c + r_{min},\ \text{and}\ c = r_{max} - r_{min}$$

wherein $n$ indicates the angle of the second button, $M\_PI$ indicates pi, $c$ indicates the preset maximum retraction value, $r_{max}$ indicates the maximum radius value of the second button, and $r_{min}$ indicates the minimum radius value of the second button. Then the size of the second button is adjusted according to the adjusted radius of the second button.

In another embodiment, the step of adjusting the size of the second button according to the angle of the second button and the maximum retraction value, includes: acquiring the size characterization parameter of the second button before the side slide operation; and adjusting the size of the second button according to the size characterization parameter of the second button acquired before the side slide operation, the angle of the second button, and the maximum retraction value.

In this embodiment, the angle of the second button is acquired in real time, and the size of the second button is adjusted according to the angle of the second button. The real-time angle of the second button is determined indirectly by the rotation position of the second button which is determined by the first sliding speed of the slide touch control point, therefore achieving controlling the adjustment of the size of the second button according to the first sliding speed of the slide touch control point which enhances the controllability of the side sliding interface. At the same time, fluency of displaying the contents on the side sliding interface is improved.

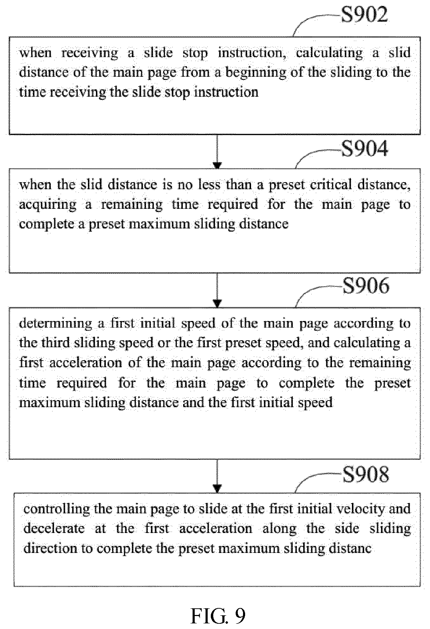

As shown in FIG. 9, in one embodiment, the method further includes a step of completing a maximum sliding distance, which includes the following steps.

In step S902: when a slide stop instruction is received, a slid distance of the main page from a beginning of the sliding to the time receiving the slide stop instruction is calculated.

In this embodiment, the slide stop instruction is generated when the user stops the side sliding operation acting on the slide touch control point. The terminal calculates the slid distance of the main page from the beginning of the sliding to the time receiving the slide stop instruction. Specifically, in one embodiment, the terminal can call the API, calculate a slid distance of the slide touch control point via the gesture processor, and then calculate the slid distance of the main page according to the ratio of the first sliding speed of the slide touch control point to the third sliding speed of the main page. In another embodiment, the terminal can acquire a position of the main page in the current display interface when receiving the slide stop instruction, and compare the current position with a position at the beginning of the sliding to obtain the slid distance of the main page.

In step S904, when the slid distance is no less than a preset critical distance, a remaining time required for the main page to complete a preset maximum sliding distance is acquired.

Specifically, the preset critical distance is acquired. The calculated slid distance is compared with the preset critical distance. When the slid distance is no less than the preset critical distance, the remaining time for the main page to complete the preset maximum sliding distance (hereinafter simply referred to as remaining time) is acquired. It can be understood that the preset maximum sliding distance is actually the maximum width of the menu page (hereinafter simply referred to as the maximum width), that is, a preset maximum displayable width of the menu page.

In one embodiment, a difference between the maximum width and the slid distance is calculated, which is a remaining distance required for the main page to complete the maximum sliding distance (hereinafter simply referred to as remaining distance). The required remaining time is calculated according to the ratio of the remaining distance to the maximum width. It can be understood that the ratio of the remaining distance to the preset width of the menu page can be set as 1:1 to acquire the remaining time. Alternatively, a preset time adjustment parameter $t_c$ is acquired, and the required remaining time can be calculated according to the preset time adjustment parameter $t_c$ and the ratio of the remaining distance to the maximum distance. Specifically, the calculation satisfies the following formula:

$$t = t_c\ *\ (W\text{-}W\_s)\ /\ W$$

Wherein $t$ indicates the required remaining time, $W\_s$ indicates the slid distance, $W$ indicates the maximum width, $W\text{-}W\_s$ indicates the remaining distance, $t_c$ indicates the time adjustment parameters. By setting the time adjustment parameter, different sliding effects can be displayed by changing the time adjustment parameter without changing the preset width of the menu page. And changing the time adjustment parameter is more efficient and saves more operation cost and resource cost when compared with changing the preset width of the menu page which reacts the interface ratio.

In another embodiment, the required remaining time is preset in the terminal, when the slid distance is no less than the preset critical distance, the preset required remaining time is acquired. Further, a corresponding relationship between the slid distance and the required remaining time is preset in the terminal. Different slid distances correspond to different required remaining time. Then the preset required remaining time corresponding to the slid distance can be acquired according to the corresponding relationship.

In step S906: a first initial speed of the main page is determined according to the third sliding speed or the first preset speed, and a first acceleration of the main page is calculated according to the remaining time required for the main page to complete the preset maximum sliding distance and the first initial speed.

The terminal acquires the first initial speed of the main page. Specifically, the third sliding speed can be served as the first initial speed, or the first preset speed can be acquired to be served as the first initial speed. Further, when the slide stop instruction is received, the third sliding speed can be served as the first initial speed if the third sliding speed is not zero, alternatively the first preset speed can be acquired to be served as the first initial speed. When the slide stop instruction is received and the third sliding speed is zero, then the first preset speed is served as the first initial speed. Furthermore, the corresponding relationship between the slid distance and the first preset speed is preset in the terminal. The first preset speed of the slid distance can be acquired to be the first initial speed according to the corresponding relationship.

Then, the terminal calculates the first acceleration of the main page according to the required remaining time and the first initial speed. Specifically, the terminal determines a first distance, and calculates the first acceleration of the main page according to the first distance, the required remaining time, and the first initial speed. It should be noted that, the terminal can serve the remaining distance required for the main page to complete the maximum sliding distance as the first distance when receiving the side stop instruction, or acquire a preset acceleration calculation distance to be served as the first distance, which is not limited in this embodiments of the present disclosure. The preset acceleration calculation distance is no less than a difference between the maximum width of preset menu page and the preset critical distance.

Further, the first acceleration can be calculated according to the following formula. $V_{start1}$ indicates the first initial speed, $S_1$ indicates the first distance, $t$ indicates the required remaining time, and then the first acceleration $a_1$ can be calculated according to the formula:

$$V_{start1}t + 0.5 * a_1 * t^2 = S_1$$

It can be understood that when the first distance is the remaining distance and the first initial speed is the third sliding speed of the main page, the formula changes to:

$$V_3t + 0.5 * a_1 * t^2 = W\text{-}W\_s$$

wherein $W$ indicates the maximum width, $W\_s$ indicates the slid distance, $W\text{-}W\_s$ indicates the remaining distance, $V_3$ indicates the third sliding speed, and $t$ indicates the required remaining time. In this embodiment, the first acceleration can be calculated according to the first initial speed, the remaining distance, and the time required for the main page to complete the remaining distance. In this case, when the main page exactly slides to the maximum sliding distance, the speed of the main page decreases to zero enhancing a transition of the sliding of the main page to make the sliding of the main page transiting more naturally, therefore avoiding a burden of the display interface caused by a leaping transition or a quickly sliding.

In step S908, the main page is controlled to slide deceleratedly at the first initial speed and the first acceleration along the side sliding direction to complete the preset maximum sliding distance.

Specifically, the terminal controls the main page to slide deceleratedly at the first initial speed and the first acceleration along the side sliding direction to complete the preset maximum sliding distance. In other words, the terminal controls the main page to slide deceleratedly at the first initial speed and the first acceleration along the side sliding direction until the remaining distance is completely slid to make the main page complete the preset maximum sliding distance.

In this embodiment, when the sliding operation instruction is received and the slid distance is no less than the preset critical distance, an interface that the user wants to display is indicated to a large extent, and according to the sliding operation the interface that the user wants to display is an interface that requires the main page to complete the maximum sliding distance. For example, when the user operates a side sliding, the current interface of the side sliding interface is the entire main page, and the menu page has not been displayed, then when the user side slides to a distance that exceeds the preset critical distance, it indicates that the user wants to display the menu page, in that case the main page is controlled to complete the maximum sliding distance to display the menu page at the maximum width. It does not need the user to slide to the edge of the display screen to display the menu page at the maximum width, therefore saving the operation cost of the user and accordingly saving the sliding detection resource cost for monitoring excessive side-sliding operations of the user.

In addition, by generating the acceleration, the sliding of the main page is decelerated which makes the transition of the sliding of the main page more naturally and avoids the burden of the display interface caused by the leaping transition or the quickly sliding.

It can be understood that in one embodiment, the main page in steps S902 to S908 can be replaced by the menu page to realize control of the menu page when the slide stop instruction is received and the slid distance is no less than the preset critical distance.

In one embodiment, when the slid distance is less than the preset critical distance, the main page is controlled to return to a position before the sliding operation. Specifically, a preset return time and a return initial speed of the main page can be acquired, a return acceleration of the main page is calculated according to the preset return time, the return initial speed, and the slid distance of the main page, and the main page is controlled to slide deceleratedly at the return initial speed and the return acceleration along a corresponding opposite direction of the side sliding direction to the position before the sliding operation.

In this embodiment, when the sliding operation instruction is received and the slid distance is less than the preset critical distance, it largely indicates that the user does not want to perform the side sliding operation, such as a misoperation of the user. At this point, the main page is controlled to return to an original position before the sliding operation, avoiding waste of resources caused by misoperation.

In addition, by generating the return acceleration, the return sliding of the main page is decelerated, which makes the transition of the return-sliding of the main page more naturally and avoids the burden of the display interface caused by the leaping transition or the quickly sliding.

It should be understood that, in other embodiments, the main page of this embodiment can be replaced by the menu page to realize control of the menu page when the slide stop instruction is received and the slid distance is less than the preset critical distance.

Further, the animation in the main page is controlled to return to a display state before the sliding operation according to the preset return time.

In one embodiment, after the step of acquiring the remaining time required for the main page to be completed the maximum sliding distance, the method further includes steps of : determining a second initial speed of the animation according to the motion parameter of the animation or a second preset speed, calculating a second acceleration of the animation according to the remaining time required for the main page to complete the preset maximum sliding distance and the second initial speed, and decleratedly performing a remaining animation in one cycle according to the second acceleration and the second initial speed.

In this embodiment, the motion parameter of the animation include the moving speed of the animation.

After acquiring the remaining time required for the main page to complete the maximum sliding distance (hereinafter simply referred to as the remaining time), the terminal acquires the second initial speed of the animation. Specifically, the moving speed of the animation can be served as the second initial speed, or the second preset speed can be acquired to be served as the second initial speed.

Further, when the slide stop instruction is received and the moving speed of the animation is not zero, then the moving speed of the animation can be served as the second initial speed, alternatively the second preset speed can be acquired to be served as the second initial speed. When the slide stop instruction is received and the moving speed of the animation is zero, the second preset speed is acquired to be served as the second initial speed. Furthermore, the terminal presets a corresponding relationship between a distance parameter of an already performed animation in one cycle and the second preset speed. When the second preset speed is served as the second initial speed, the second preset speed of the distance parameter of the already performed animation in one cycle is acquired according to the corresponding relationship to be served as the second initial speed.

In addition, the second acceleration of the animation is calculated according to the required remaining time and the second initial speed. Specifically, the terminal determines a second distance, and calculates the second acceleration of the animation according to the second distance, the required remaining time, and the second initial speed. The second distance can be referred to a remaining distance of the animation in one cycle when the slide stop instruction is received. In other words, the second distance can be calculated according to a difference between a total distance of the animation in one cycle and the distance of the already performed animation in one cycle. It can be understood that the second distance can be a straight distance or a curved distance.

Further, a calculation of the second acceleration can be performed according to the following formula, wherein $V_{start2}$ indicates the second initial speed, $S_2$ indicates the second distance, and $t$ indicates the required remaining time, then the second acceleration $a_2$ can be calculated according to the formula:

$$V_{start2}t + 0.5 * a_2 * t^2 = S_2.$$

In other embodiments, the second distance can be a preset arbitrary distance, and the second acceleration can be calculated according to the preset arbitrary distance. The animation is controlled to be performed deceleratedly and gradually at the second acceleration and the second initial speed until the second initial speed decreases to zero.

In this embodiment, the remaining time required for the main page to complete the preset maximum sliding distance is acquired, and the remaining animation is controlled to be performed according to a same time as to control the movement of the main page, therefore enhancing correlation between performance of the animation and the sliding of the main page and improving integration and integrity of the animation and the main page.

In one embodiment, the animation includes a first animation. When the first animation includes a virtual turntable, the second initial speed is an initial speed of the virtual turntable and the initial speed of the virtual turntable is determined according to the rotation speed of the virtual turntable or the second preset speed. In this embodiment, the second acceleration of the animation is calculated according to the remaining time required for the main page to complete the preset maximum sliding distance and the second initial speed. The step of performing the remaining animation in one cycle deceleratedly according to the second acceleration and the second initial speed includes: calculating a rotated arc length of the virtual turntable; calculating the acceleration of the virtual turntable according to the rotated arc length of the virtual turntable, the remaining time required for the main page to complete the preset maximum sliding distance, and the initial speed of the turntable; and performing a remaining rotation operation of the virtual turntable in one cycle deceleratedly according to the acceleration of the virtual turntable and the initial speed of the virtual turntable.

In this embodiment, the animation includes the first animation, and when the first animation includes the virtual turntable, the terminal acquires the rotated arc length of the virtual turntable from a start of the rotation of the virtual turntable to the time that the slide stop instruction is received, and the remaining arc length of the rotation of the virtual turntable in one cycle is calculated according to the rotated arc length. In addition, the acceleration of the virtual turntable is calculated according to the remaining arc length of the rotation of the virtual turntable in one cycle, the initial speed of the virtual turntable, and the required remaining time. Specifically, the acceleration $a_{rotation}$ of the virtual turntable can be calculated according to the following formula:

$$V_{Cstart} t + 0.5 * a_{rotation} * t^2 = 2M\_PI * R-L,$$

wherein $V_{Cstart}$ indicates the initial speed of the virtual turntable, $t$ indicates the required remaining time, $R$ indicates the radius of the virtual turntable, and $L$ indicates the rotated arc length.

Wherein, $V_{Cstart}$ can be the rotation speed of the virtual turntable, or the second preset speed. Further, if the rotation speed of the virtual turntable is not zero when the slide stop instruction is received, the rotation speed of the virtual turntable can be served as the initial speed of the virtual turntable, alternatively the second preset speed can be acquired to be served as the initial speed of the virtual turntable. If the rotation speed of the virtual turntable is zero when the slide stop instruction is received, the second preset speed is acquired to be served as the initial speed of the virtual turntable.

Further, the corresponding relationship between the rotated arc length and the second preset speed is preset in the terminal. When the second preset speed is going to be served as the initial speed of the virtual turntable, the second preset speed corresponding to the rotated arc length can be acquired according to the corresponding relationship to be served as the initial speed of the to virtual turntable.

It can be understood that a reference point on the virtual turntable can be selected at the beginning of the rotation, a rotated central angle of the virtual turntable can be calculated by comparing the position of the reference point at the beginning and a position of the reference point when the slide stop instruction is received. The rotated arc length is calculated according to the central angle of the virtual turntable. Alternatively, the rotated arc length can be calculated according to a product of a rotated arc and the radius of the virtual turntable.

In this embodiment, the remaining time required for the main page to complete the preset maximum slide distance is acquired, and the remaining rotation of the virtual turntable in one cycle is controlled according to a same time of the control of the movement of the main page, therefore enhancing the relevance of the performance of the animation and the sliding of the main page, and improving the integration and the integrity of the animation and the main page.

It should be understood that in other embodiments, the size of the second button in the virtual turntable can be adjusted according to the real-time rotation of the virtual turntable while controlling the virtual turntable to complete the rotation in the remaining cycle. The specific adjustment manner is same as the adjustment manner of the second button when the virtual turntable is controlled by the slide touch control point described in above embodiment, that is, the angle of the second button is acquired in real time, the angle of the second button is centered on the center point of the virtual turntable, and the size of the second button is adjusted according to the angle of the second button and the maximum retraction value, which is not described in detail any more in this embodiment.

In one embodiment, after the step of performing the remaining rotation operation of the virtual turntable in one cycle according the acceleration of the virtual turntable and the initial speed of the virtual turntable, the method further includes: acquiring a current second button in the virtual turntable; acquiring the at least one first button corresponding to the current second button according to the corresponding relationship between the second button and the at least one first button; and performing the at least one first button.

In this embodiment, after the step of performing the remaining rotation operation of the virtual turntable in one cycle according to the acceleration of the virtual turntable and the initial speed of the virtual turntable, the current second button in the virtual turntable is acquired. The current second button refers to the second button in a currently selected state and a size characterization parameter of the current second button is at the maximum value $M_{max}$.

In addition, a corresponding relationship between the second button and the at least one first button is preset in the terminal, according to the corresponding relationship, the at least one first button corresponding to the current second button is acquired, and the corresponding at least one button is performed. Further, the corresponding relationship between the first button and the second button is used for characterizing that the first button is a corresponding sub-button of the second button. That is, the first button indicates various details of the content represented by the second button.

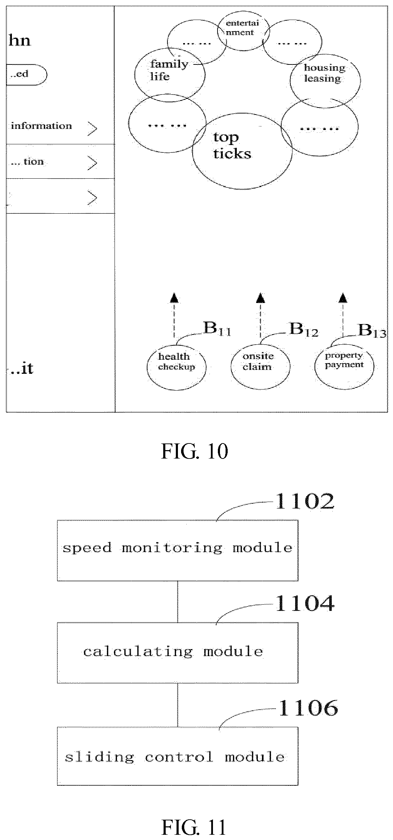

As shown in FIG. 10, it is a display interface of a main page in a side sliding interface according to one embodiment. The content of the current second button is "top picks," the contents of the first buttons corresponding to the current second button are $B_{11}$ "health checkup", $B_{12}$ "onsite claim", and $B_{13}$ "property payment", and the corresponding first buttons $B_{11}$, $B_{12}$, and $B_{13}$ are performed. It should be understood that $B_{11}$ "health checkup", $B_{12}$ "onsite claim", and $B_{13}$ "property payment" are various details of "top picks".

In this embodiment, the first animation and the second animation are associated through the first button and the second button, which is equivalent to that a large animation is formed according to the first animation and the second animation, therefore increasing a diversity of display content in a limited display area and improving a display utilization of the screen.

In one embodiment, the step of performing the corresponding at least one first button, includes: determining a third initial speed of the first button according to the moving speed of the first button or a third preset speed; and controlling the first button to simulate an elastic movement at the third initial speed until stopping at a preset final stop area along a direction of the elastic movement.

In this embodiment, the terminal determines the third initial speed of the first button. Specifically, the moving speed of the first button or the third preset speed is served as the third initial speed of the first button. Further, reference can be made to the foregoing method to determine when the third preset speed or the moving speed of the first button can be served as the third initial speed, which will not go into details any more in this step.

Further, the final stop area is preset in the direction of the elastic movement in the terminal. The final stop area can be a location range. The terminal controls the first button to simulate the elastic movement at the third initial speed and controls the first button to stop at the preset final stop area in the direction of the elastic movement after the simulated elastic movement.

Herein, the simulated elastic movement refers to that the first button is controlled to be performed in a form of elastic movement. That is, the first button is controlled to move between at least one direction reversal positions. The direction reversal position refers to a position that a moving direction of the first button is reversed when the position is reached. For example, during the first button moves from a previous direction reversal position $Y_1$ to a next direction reversal position $Y_2$, the moving direction is vertically downward, when the direction reversal position $Y_2$ is reached, the moving direction is reversed and becomes vertically upward, then the first button moves from the direction reversal position $Y_2$ to a next direction reversal position $Y_3$ along a vertically upward direction, and so on, and finally the first button is controlled to stop at the preset final stop area in the direction of the elastic movement.

In the simulated elastic movement, a decrease of the moving speed can be achieved according to acquiring a preset distance between the preset previous direction reversal position and the next direction reversal position and an acceleration thereof, thereby realizing the simulated elastic movement. The simulated elastic movement makes the transition therebetween more fluent and more in line with the mechanics of nature, and is capable of reducing burden on the display as compared to displaying directly or abruptly.

It can be understood that in other embodiments, the first button corresponding to the current second button can be rendered directly from scratch at the final stop area. Alternatively, the first button can be controlled to move to the preset final stop area along a preset path of a straight movement or a curve movement, which is not limited in this embodiment of the present disclosure.

As shown in FIG. 11, in one embodiment, a display control device of a side sliding interface is provided. The display control device includes: a speed monitoring module 1102, which is used for acquiring a first sliding velocity of a sliding touch point in real time, the sliding touch point acts on arbitrary position of the side sliding interface, the first sliding speed includes a first sliding speed and a first sliding direction; a calculating module 1104, which is used for calculating a second sliding speed of a menu page and a third sliding speed of a main page according to the first sliding speed, and determining a side sliding direction of the menu page and the main page according to the first sliding direction; and a sliding control module 1106, which is used for controlling the menu page and the main page to slide at the second sliding speed and the third sliding speed respectively along the side sliding direction.

In one embodiment, the main page includes animation. The calculating module 1104 is further used for calculating a motion parameter of the animation according to the first sliding velocity.

The device further includes an animation performing module which is used for performing the animation according to the motion parameter.

In one embodiment, the animation includes a first animation and/or a second animation. The first animation includes a virtual turntable. The second animation includes a first button. In this embodiment, the calculating module is further used for acquiring a first calculation parameter, and calculating a rotation speed and a rotation direction of the virtual turntable according to the first calculation parameter and the first sliding velocity; and/or acquiring a second calculation parameter and calculating a moving speed and a moving direction of the first button according to the second calculation parameter and the first sliding velocity.

In one embodiment, the calculating module 1104 is further used for acquiring a perimeter of the virtual turntable and a maximum width of preset menu page, and calculating the first calculation parameter according to a ratio of the perimeter of the virtual turntable to the maximum width of the menu page.

In one embodiment, the calculating module 1104 is further used for acquiring at least one preset moving range of the first button, determining a moving difference according to the preset moving range, acquiring the maximum width of the preset menu page, and calculating a second calculation parameter according to a ratio of the moving difference to the maximum width of the menu page.

In one embodiment, the virtual turntable includes a second button, the device further includes: a corresponding angle determining module which is used for acquiring an angle of the second button in real time, the angle of the second button is an angle which is centered on a center of the virtual turntable and is formed by a horizontal straight line passing through the center of the virtual turntable rotating to further passing through a center of the second button; and an adjusting module which is used for adjusting a size of the second button according to the angle of the second button and a preset maximum retraction value.

In one embodiment, the calculating module 1104 is further used for calculating a slid distance of the main page from a beginning of the sliding to the time when receiving a slide stop instruction.

In this embodiment, the device further includes: an acquiring module which is used for acquiring a remaining time required for the main page to complete a preset maximum sliding distance when the slid distance is no less than a preset critical distance.

The calculating module 1104 is further used for determining a first initial speed of the main page according to the third sliding speed or a first preset speed and calculating a first acceleration of the main page according to the remaining time required for the main page to complete the preset maximum sliding distance and the first initial speed.

The sliding control module 1106 is further used for controlling the main page to slide deceleratedly at the first initial speed and the first acceleration along the side sliding direction to complete the preset maximum sliding distance.

In an embodiment, the acquiring module is further used for determining a second initial speed of the animation according to a motion speed in the motion parameter of the animation or a second preset speed.

The calculating module 1104 is further used for calculating a second acceleration according to the remaining time required for the main page to complete the preset maximum sliding distance and the second initial speed.

The animation performing module is further used for performing a remaining animation in one cycle deceleratedly according to the second acceleration and the second initial speed.

Each module of the above-described display control device of the side sliding interface can be implemented in whole or in part by software, hardware, or a combination thereof. Each of the above modules can be of hardware form embedded in or separately from a processor, or be of software form stored in a memory of the base station, so that the processor can be executed to perform operations corresponding to above modules. The processor can be a central processing unit (CPU), a microprocessor, a microcontroller, or the like.

A person of ordinary skill in the art could understand that all or part processes of the method in the foregoing embodiments can be implemented by relevant hardware instructed by a computer program. The computer program can be stored in a computer-readable storage medium, and when executed includes the processes of the method in foregoing embodiment. The storage medium can be a magnetic disk, an optical disk, a read-only memory (ROM), a random access memory (RAM), or the like.

Each technical feature in foregoing embodiments can be combined casually. In order to make the description simple, all other possible combinations of the technical features in the foregoing embodiments are not described. However, as long as there is no conflict between the technical features of the embodiments in other possible combinations, they should be considered as the scope of this manual.

The above-mentioned embodiments merely present several embodiments of the present disclosure, which are described specifically and in detail but should not be interpreted as limit to the scope of the present disclosure. It should be noted that those skilled in the art may make various modifications and improvements without departing from the concept of the present disclosure, all of which fall in the protection scope of the present disclosure. Therefore, the protection scope of the present disclosure shall be subject to the appended claims.

**Claims**

1. A display control method of a side sliding interface, comprising:

   acquiring a first sliding velocity of a sliding touch point in real time, wherein the sliding touch point acts at an arbitrary position on a side sliding interface, the first sliding velocity comprises a first sliding speed and a first sliding direction;
   calculating a second sliding speed of a menu page and a third sliding speed of a main page according to the first sliding speed, and determining a side sliding direction of the menu page and the main page according to the first sliding direction; and
   controlling the menu page and the main page to slide at the second sliding speed and the third sliding speed respectively along the side sliding direction.

2. The method according to claim 1, wherein the main page comprises animation, and after acquiring the first sliding velocity of the sliding touch point in real time, the method further comprises:

   calculating a motion parameter of the animation according to the first sliding velocity; and performing the animation according to the motion parameter.

3. The method according to claim 2, wherein the animation comprises a first animation and/or a second animation, the first animation comprises a virtual turntable, the second animation comprises a first button; wherein the calculating the motion parameter of the animation according to the first sliding velocity comprises:

   acquiring a first calculation parameter, and calculating a rotation speed and a rotation direction of the virtual turntable according to the first calculation parameter and the first sliding velocity; and/or
   acquiring a second calculation parameter, and calculating a moving speed and a corresponding moving direction of the first button according to the second calculation parameter and the first sliding velocity.

4. The method according to claim 3, wherein before acquiring the first calculation parameter, the method further comprises:

   acquiring a perimeter of the virtual turntable and a maximum width of the preset menu page; and
   calculating the first calculation parameter according to a ratio of the perimeter of the virtual turntable to the maximum width of the preset menu page.

5. The method according to claim 3, wherein before acquiring the second calculation parameter, the method further comprises:

   acquiring at least one preset moving range corresponding to the first button, determining a movement difference according to the preset moving range;
   acquiring a maximum width of preset menu page; and
   calculating the second calculation parameter according to a ratio of the movement difference to the maximum width of preset menu page.

6. The method according to claim 3, wherein the virtual turntable comprises a second button, the method further comprises:

   acquiring an angle of the second button in real time, wherein the angle of the second button is an angle which is centered on a center of the virtual turntable and is formed by a horizontal straight line passing through the center of the virtual turntable rotating to further passing through a center of the second button; and

adjusting a size of the second button according to the angle of the second button and a preset maximum retraction value.

7. The method according to claim 1, further comprising:

when receiving a slide stop instruction, calculating a slid distance of the main page from a beginning of the sliding to the time receiving the slide stop instruction;
when the slid distance is no less than a preset critical distance, acquiring a remaining time required for the main page to complete a preset maximum sliding distance;
determining a first initial speed of the main page according to the third sliding speed or the first preset speed, and calculating a first acceleration of the main page according to the remaining time required for the main page to complete the preset maximum sliding distance and the first initial speed; and
controlling the main page to slide at the first initial velocity and decelerate at the first acceleration along the side sliding direction to complete the preset maximum sliding distance.

8. The method according to claim 7, wherein after acquiring the remaining time required for the main page to complete the preset maximum sliding distance, the method further comprises:

determining a second initial speed of the animation according to a motion speed of the motion parameter of the animation or a second preset speed; and
calculating a second acceleration according to the remaining time required for the main page to complete the preset maximum sliding distance and the second initial speed, and deceleratingly performing a remaining animation in one cycle.

9. A display control device of a side sliding interface, comprising:

a speed monitoring module configured to acquire a first sliding velocity of a sliding touch point in real time, wherein the sliding touch point acts at an arbitrary position on a side sliding interface, the first sliding velocity comprises a first sliding speed and a first sliding direction;
a calculating module configured to calculate a second sliding speed of a menu page and a third sliding speed of a main page according to the first sliding speed, and determine a side sliding direction of the menu page and the main page according to the first sliding direction; and
a sliding control module configured to control the menu page and the main page to slide at the second sliding speed and the third sliding speed respectively along the side sliding direction.

10. The device according to claim 9, wherein the main page comprises animation, the calculating module is further configured to calculate a motion parameter of the animation according to the first sliding velocity; and the device further comprises an animation performing module configured to perform the animation according to the motion parameter.

11. The device according to claim 10, wherein the animation comprises a first animation and/or a second animation, the first animation comprises a virtual turntable, the second animation comprises a first button; and
the calculating module is further configured to acquire a first calculation parameter, and calculate a rotation speed and a rotation direction of the virtual turntable according to the first calculation parameter and the first sliding velocity; and/or
acquire a second calculation parameter, and calculate a moving speed and a corresponding moving direction of the first button according to the second calculation parameter and the first sliding velocity.

12. The device according to claim 11, wherein the calculating module is further configured to acquire a perimeter of the virtual turntable and a maximum width of preset menu page; and calculate the first calculation parameter according to a ratio of the perimeter of the virtual turntable to the maximum width of preset menu page.

13. The device according to claim 11, wherein the calculating module is further configured to acquire at least one preset moving range corresponding to the first button; determine a movement difference according to the preset moving range; acquire a maximum width of preset menu page; and calculate the second calculation parameter according to a ratio of the movement difference to the maximum width of preset menu page.

14. The device according to claim 11, wherein the virtual turntable comprises a second button, the device further comprises:

an angle determining module configured to acquire an angle of the second button in real time, wherein the angle of the second button is an angle which is centered on a center of the virtual turntable and is formed by a horizontal straight line passing through the center of the virtual turntable rotating to further passing through a center of the second button; and

an adjusting module configured to adjust a size of the second button according to the angle of the second button and a preset maximum retraction value.

15. The device according to claims 9 or 10, wherein when receiving a slide stop instruction, the calculating module is further configured to calculate a slid distance of the main page from a beginning of the sliding to receiving the slide stop instruction; and the device further comprises:

an acquiring module configured to acquire a remaining time required for the main page to complete a preset maximum sliding distance when the slid distance is no less than a preset critical distance;

the calculating module is further configured to determine a first initial speed of the main page according to the third sliding speed or the first preset speed, and calculate a first acceleration of the main page according to the remaining time required for the main page to complete the preset maximum sliding distance and the first initial speed; and

the sliding control module is further configured to control the main page to slide at the first initial velocity and decelerate at the first acceleration along the side sliding direction to complete the preset maximum sliding distance.

16. The device according to claim 15, wherein the acquiring module is further configured to determine a second initial speed of the animation according to a motion speed of the motion parameter of the animation or a second preset speed;

the calculating module is further configured to calculate a second acceleration according to the remaining time required for the main page to complete the preset maximum sliding distance and the second initial speed; and

the animation performing module is further configured to deceleratingly perform a remaining animation in one cycle.

17. A terminal, comprising:

a processor; and

a memory storing instructions, which, when executed by the processor cause the processor to perform following steps of:

acquiring a first sliding velocity of a sliding touch point in real time, wherein the sliding touch point acts at arbitrary position on a side sliding interface, the first sliding velocity comprises a first sliding speed and a first sliding direction;

calculating a second sliding speed of a menu page and a third sliding speed of a main page according to the first sliding speed, and determining a side sliding direction of the menu page and the main page according to the first sliding direction; and

controlling the menu page and the main page to slide at the second sliding speed and the third sliding speed respectively along the side sliding direction.

18. The terminal according to claim 17, wherein the main page comprises animation, and after acquiring the first sliding velocity of the sliding touch point in real time, the processor further executes following steps:

calculating a motion parameter of the animation according to the first sliding velocity; and performing the animation according to the motion parameter.

19. The terminal according to claim 18, wherein the animation comprises a first animation and/or a second animation, the first animation comprises a virtual turntable, the second animation comprises a first button;

wherein the calculating motion parameter of the animation according to the first sliding velocity executed by the processor comprises:

acquiring a first calculation parameter, and calculating a rotation speed and a rotation direction of the virtual turntable according to the first calculation parameter and the first sliding velocity; and/or

acquiring a second calculation parameter, and calculating a moving speed and a corresponding moving direction of the first button according to the second calculation parameter and the first sliding velocity.

20. The terminal according to claim 19, wherein before acquiring the first calculation parameter, the processor further executes following steps:

acquiring a perimeter of the virtual turntable and a maximum width of preset menu page; and calculating the first calculation parameter according to a ratio of the perimeter of the virtual turn table to the maximum width of preset menu page.

21. The terminal according to claim 19, wherein before acquiring the second calculation parameter, the processor further executes following steps:

acquiring at least one preset moving range corresponding to the first button, determining a movement difference according to the preset moving range;
acquiring a maximum width of preset menu page; and
calculating the second calculation parameter according to a ratio of the movement difference to the maximum width of preset menu page.

22. The terminal according to claim 19, wherein the virtual turntable comprises a second button, the processor further executes following steps:

acquiring an angle of the second button in real time, wherein the angle of the second button is an angle which is centered on a center of the virtual turntable and is formed by a horizontal straight line passing through the center of the virtual turntable rotating to further passing through a center of the second button; and
adjusting a size of the second button according to the angle of the second button and a preset maximum retraction value.

23. The terminal according to claim 17, wherein the processor further executes following steps:

when receiving a slide stop instruction, calculating a slid distance of the main page from a beginning of the sliding to receiving the slide stop instruction;
when the sliding distance is no less than a preset critical distance, acquiring a remaining time required for the main page to complete a preset maximum sliding distance;
determining a first initial speed of the main page according to the third sliding speed or the first preset speed, and calculating a first acceleration of the main page according to the remaining time required for the main page to complete the preset maximum sliding distance and the first initial speed; and
controlling the main page to slide at the first initial velocity and decelerate at the first acceleration along the side sliding direction to complete the preset maximum sliding distance.

24. The terminal according to claim 23, wherein after acquiring the remaining time required for the main page to complete the preset maximum sliding distance, the processor further executes following steps:

determining a second initial speed of the animation according to a motion speed of the motion parameter of the animation or a second preset speed; and
calculating a second acceleration according to the remaining time required for the main page to complete the preset maximum sliding distance and the second initial speed, and deceleratingly performing a remaining animation in one cycle.

25. One or more non-transitory readable storage medium storing computer-executable instructions that, when executed by one or more processors, cause the one or more processors to perform following steps of:

acquiring a first sliding velocity of a sliding touch point in real time, wherein the sliding touch point acts at arbitrary position on a side sliding interface, the first sliding velocity comprises a first sliding speed and a first sliding direction;
calculating a second sliding speed of a menu page and a third sliding speed of a main page according to the first sliding speed, and determining a side sliding direction of the menu page and the main page according to the first sliding direction; and

controlling the menu page and the main page to slide at the second sliding speed and the third sliding speed respectively along the side sliding direction.

FIG. 1

processor

system bus

operating system

display screen

input device

computer-executable
instructions

network interface

non-transitory storage
medium

internal memory

terminal

FIG. 1

S202

acquiring a first sliding velocity of a sliding touch point
in real time, wherein the sliding touch point acts on
arbitrary position of a side sliding interface, the first
sliding velocity comprises a first sliding speed and a
first sliding direction

S204

calculating a second sliding speed of a menu page and a
third sliding speed of a main page according to the first
sliding speed, and determining a side sliding direction
of the menu page and the main page according to the
first sliding direction

S206

controlling the menu page and the main page to slide at
the second sliding speed and the third sliding speed
respectively along the side sliding direction

FIG. 2

FIG. 3

FIG. 4

FIG. 5

FIG. 6

S702

acquiring an angle of the second button in real time, wherein the angle of the second button is an angle which is centered on a center of the virtual turntable and is formed by a horizontal straight line passing through the center of the virtual turntable rotating to further passing through a center of the second button

S704

adjusting a size of the second button according to the angle of the second button and a preset maximum retraction value

FIG. 7

FIG. 8

S902

when receiving a slide stop instruction, calculating a slid distance of the main page from a beginning of the sliding to the time receiving the slide stop instruction

S904

when the slid distance is no less than a preset critical distance, acquiring a remaining time required for the main page to complete a preset maximum sliding distance

S906

determining a first initial speed of the main page according to the third sliding speed or the first preset speed, and calculating a first acceleration of the main page according to the remaining time required for the main page to complete the preset maximum sliding distance and the first initial speed

S908

controlling the main page to slide at the first initial velocity and decelerate at the first acceleration along the side sliding direction to complete the preset maximum sliding distanc

FIG. 9

FIG. 10

FIG. 11

## INTERNATIONAL SEARCH REPORT

| International application No. |
|---|
| PCT/CN2017/077547 |

### A. CLASSIFICATION OF SUBJECT MATTER

G06F 3/0484 (2013.01) i

According to International Patent Classification (IPC) or to both national classification and IPC

### B. FIELDS SEARCHED

Minimum documentation searched (classification system followed by classification symbols)

G06F 3/-

Documentation searched other than minimum documentation to the extent that such documents are included in the fields searched

Electronic data base consulted during the international search (name of data base and, where practicable, search terms used)

CNTXT, CNABS, CNKI, DWPI, SIPOABS, EPODOC: secondly, speed, velocity, homepage, at one time, simultaneously, concurrently, sideslip, first, interface, slip, menu, thirdly

### C. DOCUMENTS CONSIDERED TO BE RELEVANT

| Category* | Citation of document, with indication, where appropriate, of the relevant passages | Relevant to claim No. |
|---|---|---|
| A | CN 105144071 A (APPLE INC.) 09 December 2015 (09.12.2015) the whole document | 1-25 |
| A | CN 105393201 A (APPLE INC.) 09 March 2016 (09.03.2016) the whole document | 1-25 |
| PX | CN 105975181 A (PING AN TECHNOLOGY SHENZHEN CO., LTD.) 28 September 2016 (28.09.2016) claims 1-10, and description, paragraphs [0073]-[0080] | 1-25 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 June 2017 | 26 June 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer AI, Pan Telephone No. (86-10) 62411707 |
|---|---|

Form PCT/ISA /210 (second sheet) (July 2009)

INTERNATIONAL SEARCH REPORT
Information on patent family members

International application No.

PCT/CN2017/077547

| Patent Documents referred in the Report | Publication Date | Patent Family | Publication Date |
|---|---|---|---|
| CN 105144071 A | 09 December 2015 | AU 2014238101 A1 | 08 October 2015 |
| | | JP 2016515259 A | 26 May 2016 |
| | | KR 20150131262 A | 24 November 2015 |
| | | EP 2972739 A1 | 20 January 2016 |
| | | WO 2014149473 A1 | 25 September 2014 |
| | | HK 1219146 A1 | 24 March 2017 |
| | | US 2014267103 A1 | 18 September 2014 |
| | | US 9477404 B2 | 25 October 2016 |
| CN 105393201 A | 09 March 2016 | EP 3008562 A2 | 20 April 2016 |
| | | WO 2014200729 A2 | 18 December 2014 |
| | | WO 2014200729 A3 | 26 February 2015 |
| | | US 2014282110 A1 | 18 September 2014 |
| CN 105975181 A | 28 September 2016 | None | |

Form PCT/ISA/210 (patent family annex) (July 2009)

**REFERENCES CITED IN THE DESCRIPTION**

**Patent documents cited in the description**

- CN 2016102971061